# FASCICULE DE BREVET EUROPEEN

(11) **EP 2 772 983 B1**
(45) Date de publication et mention de la délivrance du brevet: **25.05.2016**
(21) Numéro de dépôt: 14156807.1
(22) Date de dépôt: 26.02.2014
(51) Int. Cl.: H01M 16/00

(54) **Dispositif de stockage d'énergie et procédé de gestion associé**
Vorrichtung zur Energiespeicherung, und entsprechendes Verwaltungsverfahren
Energy storage device and related management method

(30) Priorité: 27.02.2013 FR 1351734
(43) Date de publication de la demande: 03.09.2014
(73) Titulaire: Atawey, 73370 Le Bourget du Lac (FR)
(72) Inventeur: Bonnefond, Pierre-Jean, 73100 Aix-les-Bains (FR)
(74) Mandataire: Croonenbroek, Thomas Jakob

(56) Documents cités:
- EP-A1- 2 216 546
- US-A1- 2007 267 874
- US-A1- 2011 183 222
- US-A1- 2012 068 661

## Description

La présente invention concerne le domaine des énergies renouvelables et plus particulièrement la production et le stockage d'énergie à partir d'énergies renouvelables.

Il est connu dans l'état de la technique de convertir une énergie renouvelable, par exemple l'énergie solaire ou l'énergie éolienne, en énergie électrique par le biais de convertisseurs comme des panneaux photovoltaïques ou des éoliennes puis de stocker l'énergie électrique produite dans une batterie. En effet, du fait du décalage temporel entre la production de l'énergie électrique à partir d'énergie renouvelable et la consommation de l'électricité produite, il est nécessaire de pouvoir stocker cette énergie électrique. Le stockage est par exemple réalisé par une batterie pour le stockage à court terme qui peut être couplée à un dispositif de stockage d'hydrogène pour le stockage à moyen ou long terme.

Cependant, les variations de flux électrique produit par les convertisseurs peuvent être brusques et importantes, par exemple lors du passage d'un nuage au-dessus de panneaux photovoltaïques provoquant une zone d'ombre ou lorsque le vent souffle en rafales pour des éoliennes. De la même manière, les variations de consommation peuvent être rapides et importantes. Ces phénomènes impliquent de nombreuses et brusques variations de charge au niveau de la batterie ce qui contribue à réduire fortement le niveau de vie de la batterie.
Afin de réduire ces variations, les solutions connues de l'état de la technique sont l'utilisation de super-condensateurs mais le coût de ces derniers reste prohibitif. US 2012 0068661 et US20070267874 décrivent des dispositifs de production et de stockage d'énergie électrique.

La présente invention vise donc à surmonter au moins partiellement les inconvénients précités de l'état de la technique et à proposer un dispositif permettant de réduire les variations de charge au niveau de la batterie pour un coût limité.

A cet effet, la présente invention concerne un dispositif de stockage d'énergie destiné à être alimenté par au moins une unité de génération d'un flux électrique à partir d'une source d'énergie renouvelable, ledit dispositif comprenant les équipements suivants :
- une batterie électrochimique,
- une unité de stockage par hydrogène montée en parallèle à la batterie électrochimique, ladite unité de stockage comprenant un électrolyseur alcalin, ladite batterie et ladite unité de stockage étant destinées d'une part à stocker l'énergie fournie par la, au moins une, unité de génération et d'autre part à alimenter une charge, dans lequel le dispositif comprend également
- un premier capteur de mesure du flux électrique fourni par la, au moins une, unité de génération,
- un deuxième capteur de mesure du flux électrique fourni à la charge,
- une unité de contrôle reliée au premier et au deuxième capteurs de mesure et configurée pour piloter l'électrolyseur en fonction des variations de flux électrique mesurées par lesdits premier et deuxième capteurs, le pilotage dudit électrolyseur étant réalisé pour absorber au moins partiellement des variations rapides des flux électriques mesurés.

Selon un autre aspect de la présente invention, les variations rapides des flux électriques mesurés correspondent aux variations dont la valeur absolue de la dérivée est supérieure à un seuil prédéterminé.

Selon un aspect additionnel de la présente invention , l'unité de contrôle est configurée pour réguler le niveau de charge de la batterie électrochimique à un niveau prédéterminé et variable au cours du temps.

Selon un aspect supplémentaire de la présente invention, le niveau prédéterminé est déterminé en fonction des prévisions de production par l'unité de génération et de consommation de flux électrique par la charge.

Selon un autre aspect de la présente invention, l'unité de stockage par hydrogène comprend un électrolyseur alcalin monopolaire configuré pour convertir le flux électrique reçu en hydrogène, des moyens de stockage d'hydrogène comprenant au moins un hydrure métallique et une pile à combustible configurée pour convertir l'hydrogène stocké en flux électrique.

Selon un aspect supplémentaire de la présente invention, l'unité de contrôle est configurée pour piloter la pile à combustible en fonction des variations de flux électrique mesurées par lesdits premier et deuxième capteurs.

Selon un aspect additionnel de la présente invention, la, au moins une, unité de génération d'un flux électrique à partir d'une source d'énergie renouvelable comprend au moins un équipement parmi les équipements suivants :
- un générateur photovoltaïque,
- une éolienne,
- un générateur hydroélectrique.

Selon un autre aspect de la présente invention, la batterie électrochimique est une batterie au plomb.

Les modes de réalisation de la présente invention concernent également un procédé de gestion d'un dispositif de stockage d'énergie destiné à être alimenté par au moins une unité de génération d'un flux électrique à partir d'une source d'énergie renouvelable, ledit dispositif comprenant les équipements suivants :
- une batterie électrochimique,
- une unité de stockage par hydrogène montée en parallèle à la batterie électrochimique, ladite unité de stockage comprenant un électrolyseur alcalin, ladite batterie et ladite unité de stockage étant destinées d'une part à stocker l'énergie fournie par la, au moins une, unité de génération et d'autre part à alimenter une charge,
- un premier capteur de mesure du flux électrique fourni par la, au moins une, unité de génération,
- un deuxième capteur de mesure du flux électrique fourni à la charge,
- une unité de contrôle reliée aux moyens de mesure du flux électrique et configurée pour piloter l'électrolyseur,
   le procédé comprenant les étapes suivantes dont l'ordre peut varier et/ou qui peuvent se dérouler simultanément :
- une étape de mesure du flux électrique fourni par l'unité de génération par le premier capteur,
- une étape de mesure du flux électrique consommé par la charge par le deuxième capteur,
- une étape de pilotage de l'électrolyseur en fonction des mesures du premier et du deuxième capteurs dans laquelle le pilotage de l'électrolyseur est réalisé de manière à absorber au moins partiellement les variations rapides de flux électrique mesurées.

Selon un autre aspect de la présente invention, le procédé comprend une étape supplémentaire de régulation du niveau de charge de la batterie à un niveau prédéterminé et variable au cours du temps.

D'autres caractéristiques et avantages de la présente invention apparaîtront de la description qui va maintenant en être faite, en référence aux dessins annexés qui en représentent, à titre indicatif mais non limitatif des modes de réalisation possibles.

Sur ces dessins :
- la figure 1 représente un schéma d'un dispositif de stockage d'énergie selon un mode de réalisation de la présente invention ;
- la figure 2 représente un schéma des différents liens connectés au bus de courant continu ;
- la figure 3 représente un exemple de variations des courants consommés et produits au niveaux d'équipements du dispositif de stockage selon la présente invention ;
- la figure 4 représente les différentes étapes du procédé selon un mode de réalisation de la présente invention.

Sur ces figures, les éléments ayant une fonction identique portent les même numéros de référence.

Le terme «DC» correspond à l'acronyme anglais « direct current » et signifie courant continu ;

Le terme « flux électrique » correspond à un courant électrique ou une puissance électrique.

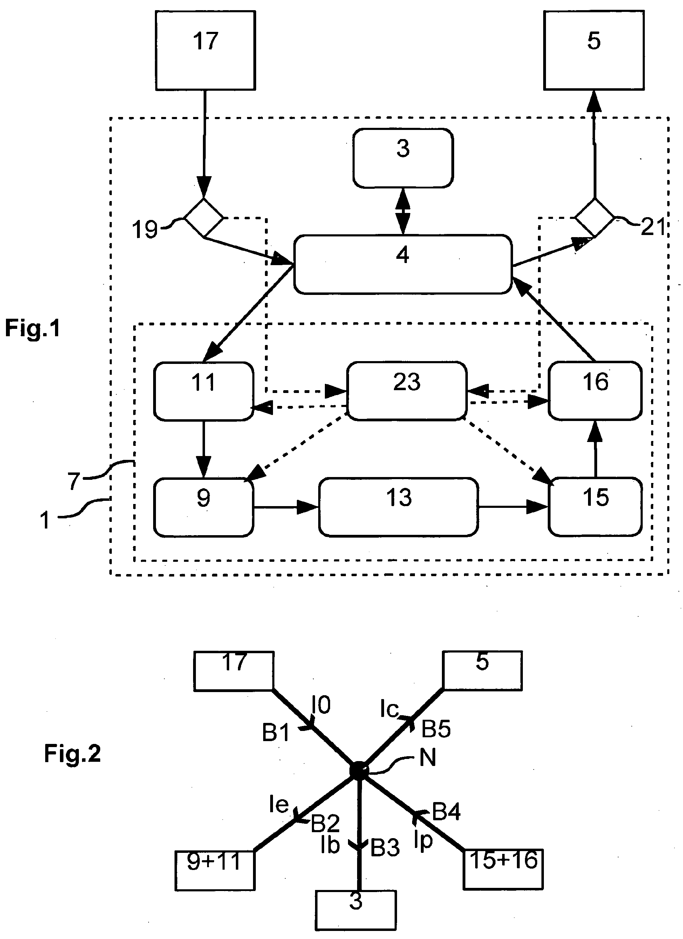

La présente invention concerne un dispositif de stockage d'énergie. La figure 1 représente un exemple de réalisation d'un tel dispositif de stockage 1. Le dispositif de stockage d'énergie 1 comprend une batterie électrochimique 3, par exemple une batterie lithium-ion ou une batterie au plomb destinée à alimenter une charge 5 comme par exemple un bâtiment, un réseau d'habitations ou tout autre dispositif électrique via un bus à courant continu 4. Le dispositif de stockage 1 comprend également une unité de stockage par hydrogène 7 qui comprend un électrolyseur 9 alimenté via un premier convertisseur DC/DC 11 comme par exemple un convertisseur de type Buck. Le premier convertisseur DC/DC 11 permet de contrôler le flux électrique alimentant l'électrolyseur 9. La batterie électrochimique 3 et l'unité de stockage par hydrogène 7 sont reliées via le bus de courant continu 4.

L'électrolyseur 9 est de type alcalin et peut être bipolaire ou monopolaire. De manière préférentielle, on utilisera un électrolyseur alcalin monopolaire ce qui permet de travailler à une puissance très faible contrairement à un électrolyseur bipolaire qui doit travailler à une puissance supérieure ou égale à 20% de sa puissance nominale. L'électrolyseur 9 est configuré pour produire de l'hydrogène par électrolyse de l'eau. L'hydrogène produit est ensuite stocké dans des moyens de stockage d'hydrogène 13 par exemple par des moyens de stockage en pression ou des moyens comprenant au moins un hydrure métallique. Des exemples de réalisation de stockage d'hydrogène connus de l'état de la technique sont décrits dans les demandes de brevet FR20080007087, FR20090004442 et FR201000002928 de la demanderesse.

L'hydrogène stocké peut être reconverti en énergie électrique par le biais d'une pile à combustible 15 pour alimenter la charge 5 via un deuxième convertisseur DC/DC 16 comme par exemple un convertisseur de type Boost qui permet de contrôler le flux électrique fourni par la pile à combustible 15.

Le dispositif de stockage 1 est alimenté par une ou plusieurs unités de génération 17 d'un flux électrique à partir d'une énergie renouvelable. Ces unités de génération 17 comprennent des convertisseurs d'énergie renouvelable en énergie électrique comme par exemple des générateurs photovoltaïques, des éoliennes, des générateurs hydroélectriques ou tout autre dispositif de conversion d'énergie renouvelable en énergie électrique. Ces unités alimentent ainsi la batterie électrochimique 3 et l'unité de stockage par hydrogène 9 via le bus à courant continu 4, ces dernières servant de tampons entre la production et la consommation d'énergie électrique.

L'énergie fournie par la ou les unités de génération 17 est donc stockée soit par la batterie 3 soit par l'unité de stockage par hydrogène 7. L'énergie fournie par la ou les unités de génération 17 peut également être utilisée directement pour alimenter la charge 5.

Le dispositif de stockage comprend également un premier 19 et un deuxième 21 capteurs de mesure du flux électrique mesurant respectivement le flux électrique fourni par la ou les unités de génération 17 au dispositif de stockage 1 et le flux électrique fourni par le dispositif de stockage 1 à la charge 5. Ces capteurs 19 et 21 sont par exemple des ampèremètres et sont reliés à une unité de contrôle 23 qui peut être une unité de contrôle de l'unité de stockage par hydrogène 7 ou une unité de contrôle du dispositif de stockage 1. Cette unité de contrôle 23 est reliée d'une part au premier convertisseur DC/DC 11 et à l'électrolyseur 9 afin de contrôler le flux électrique absorbé par l'électrolyseur 9 et d'autre part au deuxième convertisseur DC/DC 16 et à la pile à combustible 15 afin de contrôler le flux électrique fourni par la pile à combustible 15.

Par ailleurs, l'électronique de l'unité de contrôle 23 a une dynamique supérieure ou égale à la dynamique de l'électronique gérant la ou les unités de génération 17 et de l'électronique gérant la charge 5. L'unité de contrôle 23 comprend par exemple un microprocesseur configuré pour mettre en oeuvre un logiciel de traitement des mesures des capteurs 19 et 21 et pour piloter l'électrolyseur 9 en fonction de ces mesures de manière à ce que l'électrolyseur absorbe les variations de flux électrique au niveau de la batterie 3.

Ainsi, le bus de courant continu 4 peut être vu comme un noeud N à cinq branches notées B1, B2, B3, B4 et B5 et représenté sur la figure 2. La première branche B1 est reliée à la ou les unités de génération 17 et est parcourue par un courant I0. La branche B2 est reliée à l'électrolyseur 11 et est parcourue par un courant Ie. La troisième branche B3 correspond à la batterie 3 et est parcourue par un courant Ib. La quatrième branche B4 est reliée à la pile à combustible 15 et est parcourue par un courant Ip. La cinquième branche est reliée à la charge 5 et est parcourue par un courant Ic. Les flèches de la figure 2 représentent le sens des courants dans les différentes branches.

Cependant, il est à noter que trois configurations sont possibles.

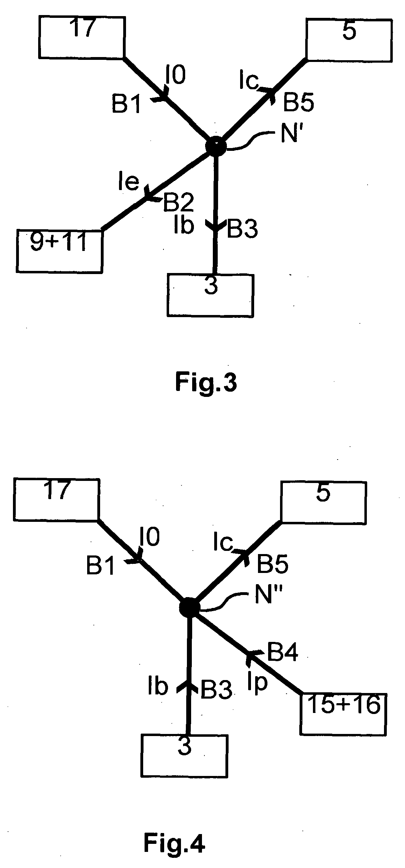

Une première configuration dans laquelle le courant 10 fourni par la ou les unités de génération 17 est supérieur au courant Ic fourni à la charge 5 dans ce cas, la pile à combustible 15 ne fonctionne pas et le courant Ip est nul (Ip=0). Le bus de courant continu 4 correspond alors au noeud N' de la figure 3. Une telle configuration correspond par exemple au fonctionnement durant la journée dans le cas d'un générateur photovoltaïque. Il est également à noter que si le courant 10 et le courant Ic s'équilibrent à peu prés sur une période de 24 heures et que la batterie 3 est suffisante pour stocker le surplus d'énergie lors des phases de production de la ou des unités de génération 17 alors le dispositif de stockage 1 peut également être utilisé sans que l'électrolyseur 9 ne soit activé.

Une deuxième configuration dans laquelle le courant 10 fourni par la ou les unités de génération 17 est inférieur au courant Ic fourni à la charge 5 et dans lequel l'électrolyseur 9 ne fonctionne pas, le courant Ie est donc nul (Ie=0). Le sens du courant Ib de la batterie est alors inversé puisque la batterie 3 alimente la charge 5. Le bus de courant continu 4 correspond alors au noeud N" de la figure 4. Une telle configuration correspond par exemple à un fonctionnement hivernal dans le cas d'un générateur photovoltaïque.

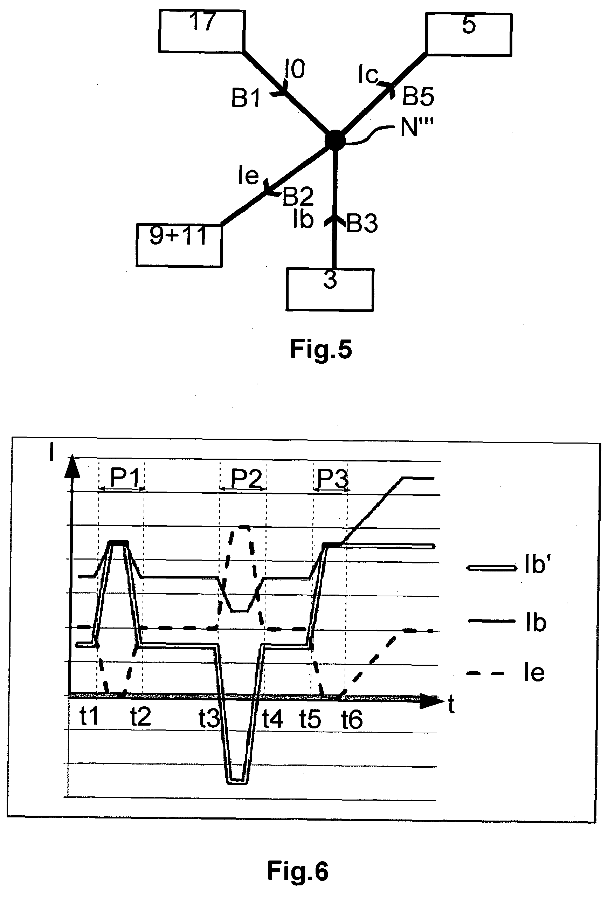

Une troisième configuration dans laquelle le courant 10 fourni par la ou les unités de génération 17 est inférieur au courant Ic fourni à la charge 5 et dans lequel la pile à combustible 15 n'est pas activée et où l'électrolyseur 9 est activé comme représenté sur la figure 5. Une telle configuration correspond par exemple à un fonctionnement pendant l'été et pendant la nuit dans le cas d'un générateur photovoltaïque.

En pratique, la pile à combustible 15 sera utilisée le moins possible du fait du coût du stockage par hydrogène de sorte que la pile à combustible 15 n'est activée que lorsque la batterie 3 est en configuration de décharge profonde et donc en particulier l'hiver et pendant la nuit puisque lorsque la journée n'aura pas suffit à recharger complètement la batterie et/ou que la charge 5 sera plus importante.

Les courants 10 et Ic sont des courants mesurés respectivement par le premier 19 et le deuxième 21 capteurs. Les courants Ip et Ie peuvent être contrôlés par l'unité de contrôle 23.

Ainsi, afin de réduire les variations rapides et brusques, c'est-à-dire les variations pouvant conduire à une usure prématurée de la batterie 3, l'unité de contrôle 23 pilote l'électrolyseur 9 de manière à absorber au moins partiellement ces variations rapides et lisser le courant Ib reçu par la batterie 3. Les variations rapides correspondent par exemple au variations dont la valeur absolue de la dérivée est supérieure à un seuil prédéterminé, la dérivée étant calculée par l'unité de contrôle 23 à partir des mesures reçues des capteurs 19 et 21. Le seuil prédéterminé est déterminé en fonction de la dynamique de l'électrolyseur 9 et de la batterie 9 et également en fonction de la puissance du dispositif de stockage 1. En effet, les convertisseurs (non représentés) liés à la ou les unités de génération 17 ou liés à la charge 5 ainsi que l'électronique de puissance liée à l'électrolyseur 9 vont absorber les variations faibles et de l'ordre de la milliseconde. Le pilotage de l'électrolyseur 9 va donc permettre d'absorber les variations de l'ordre de la seconde. Ainsi, le seuil prédéterminé va correspondre à une variation d'une fraction de l'étendue totale de fonctionnement du dispositif de stockage 1 sur un intervalle de quelques secondes. Par exemple, si la ou les unités de génération ont une étendue comprise entre 0 et 10kW, une variation mesurée au niveau du capteur 19 supérieure à 1/3 de cette étendue, c'est-à-dire environ 3kW dans un intervalle de temps inférieure à 10 secondes va déclencher le pilotage de l'électrolyseur par l'unité de contrôle 23 pour absorber cette variation. Il est à noter que ces valeurs sont données à titre d'exemple, les valeurs devant être ajustées expérimentalement en fonction des caractéristiques des différents équipements.

En effet, le temps de réponse de l'électrolyseur 9 est relativement court (quelques millisecondes) et permet d'absorber une grande partie des variations brusques de flux électrique correspondant à la différence entre 10 et Ic, les variations étant de l'ordre de la seconde dans le cas d'un générateur photovoltaïque et de l'ordre de 100ms pour la charge 5 lors de la mise sous tension d'un équipement électrique.

Lorsque le différentiel I0-Ic (ou similairement Ic-I0) redevient stable, l'électrolyseur retourne de manière lente à sa valeur de consigne d'origine, par exemple à 50% de sa puissance nominale de manière à pouvoir compenser les futures variations du différentiel 10-Ic.

De plus dans le cas d'un électrolyseur alcalin monopolaire, afin de maintenir une plage de réserve pour pouvoir absorber les variations du différentiel, l'électrolyseur 9 est utilisé de préférence dans une plage allant de 10% à 90% de sa puissance nominale, les 10% restant en fonctionnement à puissance élevée et à puissance faible permettant d'absorber les variations du différentiel I0-Ic.

Par ailleurs, la batterie 3 et l'électrolyseur 9 sont dimensionnés de manière à permettre une utilisation de l'électrolyseur 9 sur de grandes durées. En effet, afin d'utiliser le moins possible la pile à combustible 15, cette dernière sera par exemple utilisée seulement en hiver dans le cas où l'unité de génération est un générateur photovoltaïque. La batterie 3 doit donc avoir une capacité suffisante pour pouvoir assurer le stockage de l'énergie fournie par le l'unité de génération 17, par exemple un générateur photovoltaïque, et alimenter la charge 5 le reste de l'année. Par ailleurs, afin de pouvoir absorber les variations de courants au niveau de la batterie 3, l'électrolyseur 9 devra être utilisé en quasi-permanence (lors de la période pendant laquelle la pile à combustible 15 n'est pas utilisée). Ainsi, l'électrolyseur 9 aura une puissance faible de manière à pouvoir être alimenté par la batterie 3 par exemple la nuit lorsque 10 est nul et la batterie 3 sera légèrement surdimensionnée par rapport à la charge 5 pour pouvoir assurer l'alimentation de l'électrolyseur 9 pendant la nuit. L'utilisation d'un électrolyseur alcalin monopolaire permet donc du fait de la possibilité de baisser sa consigne à des valeurs très faibles de pouvoir rester actif tout en limitant sa consommation et donc la décharge de la batterie 3 lorsque 10 est faible ou nul.

La figure 6 représente un exemple de graphique représentant des courants I en fonction du temps t dans le cas ou la batterie alimente la charge 5 et que l'électrolyseur est activé, par exemple pendant la nuit durant l'été. Les courants représentés correspondent :
- au courant Ib' qui est le courant qui serait soutiré à la batterie en l'absence de pilotage spécifique de l'électrolyseur 9 et correspondant aux variations du différentiel (Ic-I0, avec 10=0 si on a seulement des capteurs photovoltaïques et que c'est la nuit) qui sont mesurées par les capteurs 19 et 21,
- au courant Ie absorbé par l'électrolyseur 9 lorsqu'il est piloté spécifiquement selon les modes de réalisation de l'invention et,
- au courant Ib soutiré à la batterie lorsque l'électrolyseur 9 est piloté de manière à absorber les variations de du différentiel Ic-10 selon les modes de réalisation de l'invention.
Le graphique comporte notamment trois périodes notées P1, P2 et P3 situées respectivement entre les temps t1 et t2, t3 et t4 et t5 et t6. Au temps t1, le courant Ib' connait une forte augmentation par exemple due à la mise en marche simultanée de plusieurs appareils électriques, l'unité de contrôle 23 ajuste alors la consigne de l'électrolyseur 9 et du premier convertisseur DC/DC 11 en sens opposé, le courant Ie diminue donc fortement mais est limité par son seuil minimal. Juste avant le temps t2, le courant Ib' diminue fortement par exemple due à l'arrêt d'équipements électriques, l'électrolyseur 9 est alors piloté pour augmenter fortement sa consigne. Ainsi, sur la période PI, le courant Ib de la batterie 3 subit une variation beaucoup plus faible que la variation de Ib'.

Lors de la période P2, le courant Ib' baisse fortement après t3, l'électrolyseur 9 augmente alors fortement sa consigne pour absorber plus de flux électrique puis le courant Ib' augmente fortement juste avant t4 de sorte que l'électrolyseur 9 baisse fortement sa consigne juste avant t4 pour réduire le flux électrique absorbé et compenser les variations du courant Is.

Enfin, pendant la période P3 où le courant Ib' augmente fortement, l'électrolyseur baisse sa consigne jusqu'à atteindre son seuil minimal puis lorsqu'à t6 le courant Ib' devient stable, l'électrolyseur 9 remonte lentement sa consigne jusqu'à une valeur moyenne de manière à pouvoir absorber les variations futures.

Ainsi, grâce au pilotage de l'électrolyseur 9 en fonction des variations du différentiel Ib', c'est-à-dire du différentiel Ic-I0, Le courant Ib absorbé par la batterie 3 comprend beaucoup moins de variations de sorte que le courant absorbé par la batterie Ib est lissé.

Ainsi en cas de grosse variation dans un intervalle de temps réduit comme entre les temps t3 et t4, l'amplitude des variations subies par le courant Ib de la batterie 3 peuvent être réduites d'un facteur trois. Le pilotage de l'électrolyseur 9 en fonction des variations des courants échangés au niveau du bus de courant continu 4 permet donc de réduire les variations de charge rapides subies par la batterie 3 et ainsi d'augmenter la durée de vie de ladite batterie 3. De la même manière, dans le cas où la batterie 3 est en phase de charge par la ou les unités de génération 17 et dans le cas où le courant fourni 10 par ces unités de génération 17 diminue ou augmente fortement, par exemple du au passage d'un nuage au-dessus des panneaux dans le cas d'un générateur photovoltaïque ou de rafales de vent dans le cas d'une éolienne, l'électrolyseur 9 peut être piloté pour absorber ces variations rapides et importantes de manière à lisser le courant Ib absorbé par la batterie 3.

Par ailleurs, l'unité de contrôle 23 peut piloter l'électrolyseur 9 de manière à contrôler le niveau de charge de la batterie 3 et de manière à ajuster ce niveau de charge à une valeur prédéterminée. En effet, lorsque la valeur de I0-Ic est positive, la différence est absorbée soit par l'électrolyseur 9 soit par la batterie 3 de sorte que le pilotage de l'électrolyseur 9 permet de contrôler le niveau de charge de la batterie 3 en la rechargeant plus ou moins.

Le pilotage de l'électrolyseur 9 par l'unité de contrôle 23 permet donc de contrôler le niveau de charge de la batterie 3.

Selon un mode de réalisation de la présente invention, le niveau de charge de la batterie 3 est régulé en fonction des prévisions de production de l'unité de génération 17 et/ou des prévisions de consommation de la charge 5. Lorsqu'il y a un décalage temporel entre la production et la consommation, le niveau de charge de la batterie 3 est régulé à un niveau haut en fin de période de production et à un niveau bas en début de période de production de manière à maximiser la plage d'utilisation de la batterie 3 pour alimenter la charge 5.

Par exemple, dans le cas où l'unité de génération 17 est un générateur photovoltaïque, l'électrolyseur 9 peut être piloté de manière à avoir un niveau de charge de la batterie 3 proche de son niveau de charge maximal à la tombée de la nuit et proche de son niveau de charge minimal à la levée du jour. Cependant, la régulation du niveau de charge de la batterie 3 est réalisée de manière progressive en évitant les variations rapides du courant Ib.

Par ailleurs, le dispositif de stockage 1 peut aussi avoir un fonctionnement saisonnier dans lequel la pile à combustible 15 fonctionne seulement un partie de l'année. Par exemple, dans le cas d'un générateur photovoltaïque, la production du générateur photovoltaïque permet d'alimenter la charge 5 au printemps et en automne et de recharger l'unité de stockage d'hydrogène 7 en été de sorte que la pile à combustible 15 ne fonctionnera quasiment qu'en hiver de manière à compenser la baisse de production du générateur photovoltaïque et la hausse de consommation de la charge 5.

La régulation du niveau de charge de la batterie 3 peut aussi être réalisée en fonction de prévisions météorologiques de manière à avoir un niveau charge de la batterie 3 suffisante pour pouvoir alimenter la charge 5.

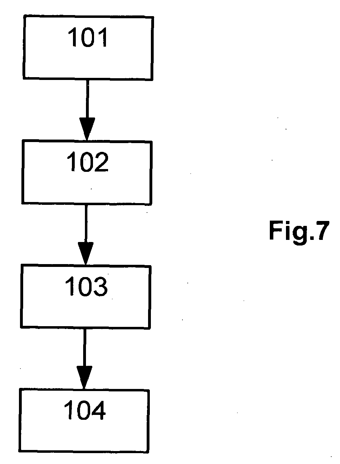

La présente invention concerne également un procédé de gestion du dispositif de stockage 1 présenté sur la figure 1 et dont les différentes étapes sont décrites sur la figure 7. La première étape 101 concerne la mesure du flux électrique fourni par la ou les unités de génération 17 au dispositif de stockage 1 par le premier capteur 19.
La deuxième étape 102 correspond à la mesure du flux électrique fourni par le dispositif de stockage 1 à la charge 5 par le deuxième capteur 21.
La troisième étape 103 concerne le pilotage de l'électrolyseur 9 par l'unité de contrôle 23 en fonction des mesures des étapes 101 et 102, le pilotage étant réalisé de manière à compenser les variations rapides de flux et lisser les variations de charge au niveau de la batterie 3. La quatrième étape 104 est un étape optionnelle et concerne la régulation du niveau de charge de la batterie à un niveau prédéterminé en fonction des prévisions de production de l'unité de génération 17 et de consommation de la charge 5.

De plus, il est à noter que ces étapes ne sont pas forcément réalisées de manière séquentielle mais peuvent être réalisées de manière continue et simultanée de sorte que l'électrolyseur 9 est piloté en permanence de manière à minimiser les variations rapides de charge au niveau de la batterie 3 et en régulant de manière lente le niveau de charge de la batterie 3.

Ainsi, le pilotage de l'électrolyseur 9 de manière à ce que son flux électrique absorbé soit inverse aux variations de flux électrique au niveau du bus de courant continu 4 permet de lisser les variations du courant Ib absorbé par la batterie 3 et ainsi d'augmenter sa durée de vie. De plus, le niveau de charge de la batterie 3 peut être régulé par le pilotage de l'électrolyseur 9 en fonction des prévisions de production et de consommation d'énergie de manière à utiliser la batterie 3 de façon plus efficace et à limiter l'utilisation de la pile à combustible 15. L'utilisation d'un électrolyseur alcalin monopolaire permettant d'obtenir une grande fiabilité ainsi qu'une utilisation sur toute la plage de puissance de l'électrolyseur permet d'optimiser l'absorption des variations. De plus, la possibilité de faire fonctionner l'électrolyseur à faible puissance permet d'augmenter sa durée d'utilisation et son intérêt pour absorber les variations de courant au niveau de la batterie 3.

Le prolongement de la durée de vie de la batterie du fait de l'absorption des variations de flux électrique par l'électrolyseur permet de rallonger la durée du dispositif de stockage 1 ce qui peut être non négligeable dans le cas d'un dispositif installé dans un environnement difficile d'accès comme par exemple en montagne, sur une île ou dans une contrée reculée.

## Revendications

1. Dispositif de stockage d'énergie (1) destiné à être alimenté par au moins une unité de génération (17) d'un flux électrique à partir d'une source d'énergie renouvelable, ledit dispositif (1) comprenant les équipements suivants :
- une batterie électrochimique (3),
- une unité de stockage par hydrogène (7) montée en parallèle à la batterie électrochimique (3), ladite unité de stockage (7) comprenant un électrolyseur alcalin (9) et des moyens de stockage d'hydrogène (13),
ladite batterie (3) et ladite unité de stockage (7) étant destinées d'une part à stocker l'énergie fournie par la, au moins une, unité de génération (17) et d'autre part à alimenter une charge (5),
**caractérisé en ce que** le dispositif comprend également
- un premier capteur de mesure (19) du flux électrique fourni par la, au moins une, unité de génération (17),
- un deuxième capteur de mesure (21) du flux électrique fourni à la charge (5),
- une unité de contrôle (23) reliée au premier (19) et au deuxième (21) capteurs de mesure et configurée pour piloter l'électrolyseur (9) en fonction des variations de flux électrique mesurées par lesdits premier (19) et deuxième (21) capteurs, le pilotage dudit électrolyseur (9) étant réalisé pour absorber au moins partiellement des variations rapides des flux électriques mesurés, les variations rapides des flux électriques mesurés correspondant aux variations dont la valeur absolue de la dérivée est supérieure à un seuil prédéterminé.

2. Dispositif de stockage d'énergie (1) selon la revendication 1 dans lequel l'unité de contrôle (23) est configurée pour réguler le niveau de charge de la batterie électrochimique (3) à un niveau prédéterminé et variable au cours du temps.

3. Dispositif de stockage d'énergie (1) selon la revendication 2 dans lequel le niveau prédéterminé est déterminé en fonction des prévisions de production par l'unité de génération (17) et de consommation de flux électrique par la charge (5).

4. Dispositif de stockage d'énergie (1) selon l'une des revendications précédentes dans lequel l'électrolyseur alcalin (9) de l'unité de stockage d'hydrogène est un électrolyseur alcalin monopolaire.

5. Dispositif de stockage d'énergie (1) selon l'une des revendications précédentes dans lequel l'unité de stockage par hydrogène (7) comprend un électrolyseur alcalin monopolaire (9) configuré pour convertir le flux électrique reçu en hydrogène, des moyens de stockage d'hydrogène (13) comprenant au moins un hydrure métallique et une pile à combustible (15) configurée pour convertir l'hydrogène stocké en flux électrique.

6. Dispositif de stockage d'énergie (1) selon la revendication 5 dans lequel l'unité de contrôle est configurée pour piloter la pile à combustible (15) en fonction des variations de flux électrique mesurées par lesdits premier (19) et deuxième(21) capteurs.

7. Dispositif de stockage d'énergie (1) selon l'une des revendications précédentes dans lequel la, au moins une, unité de génération (17) d'un flux électrique à partir d'une source d'énergie renouvelable comprend au moins un équipement parmi les équipements suivants :
- une générateur photovoltaïque,
- une éolienne,
- un générateur hydroélectrique.

8. Procédé de gestion d'un dispositif de stockage d'énergie (1) destiné à être alimenté par au moins une unité de génération (17) d'un flux électrique à partir d'une source d'énergie renouvelable, ledit dispositif comprenant les équipements suivants :
- une batterie électrochimique (3),
- une unité de stockage par hydrogène (7) montée en parallèle à la batterie électrochimique (3), ladite unité de stockage (7) comprenant un électrolyseur alcalin (9) et des moyens de stockage d'hydrogène (13),
ladite batterie (3) et ladite unité de stockage (7) étant destinées d'une part à stocker l'énergie fournie par la, au moins une, unité de génération (17) et d'autre part à alimenter une charge (5),
- un premier capteur de mesure (19) du flux électrique fourni par la, au moins une, unité de génération (17),
- un deuxième capteur de mesure (21) du flux électrique fourni à la charge (5),
- une unité de contrôle (23) reliée aux moyens de mesure du flux électrique et configurée pour piloter l'électrolyseur (9),
le procédé comprenant les étapes suivantes dont l'ordre peut varier et/ou qui peuvent se dérouler simultanément :
- une étape de mesure (101) du flux électrique fourni par l'unité de génération par le premier capteur (19),
- une étape de mesure (102) du flux électrique consommé par la charge par le deuxième capteur (21),
- une étape de pilotage (103) de l'électrolyseur (9) en fonction des mesures du premier (19) et du deuxième (21) capteurs dans laquelle le pilotage de l'électrolyseur (9) est réalisé de manière à absorber au moins partiellement les variations rapides de flux électrique mesurées, les variations rapides des flux électriques mesurés correspondant aux variations dont la valeur absolue de la dérivée est supérieure à un seuil prédéterminé.

9. Procédé de gestion selon la revendication 8 comprenant une étape supplémentaire (104) de régulation du niveau de charge de la batterie (3) à un niveau prédéterminé et variable au cours du temps.

## Patentansprüche

1. Vorrichtung zur Energiespeicherung (1), die dazu bestimmt ist, von mindestens einer Einheit (17) zur Erzeugung eines Stromflusses von einer erneuerbaren Energiequelle gespeist zu werden, wobei die Vorrichtung (1) die folgenden Ausrüstungen umfasst:
- eine elektrochemische Batterie (3),
- eine Speichereinheit durch Wasserstoff (7), die parallel zu der elektrochemischen Batterie (3) montiert ist, wobei die Speichereinheit (7) einen alkalischen Elektrolyseur (9) und Wasserstoffspeichermittel (13) umfasst,
wobei die Batterie (3) und die Speichereinheit (7) dazu bestimmt sind, einerseits die von der mindestens einen Erzeugungseinheit (17) gelieferte Energie zu speichern, und andererseits eine Last (5) zu speisen,
**dadurch gekennzeichnet, dass** die Vorrichtung auch umfasst
- einen ersten Messfühler (19) des Stromflusses, der von der mindestens einen Erzeugungseinheit (17) geliefert wird,
- einen zweiten Messfühler (21) des Stromflusses, der von der Last (5) geliefert wird,
- eine Kontrolleinheit (23), die mit dem ersten (19) und dem zweiten (21) Messfühler verbunden und dazu vorgesehen ist, den Elektrolyseur (9) in Abhängigkeit von den Variationen des Stromflusses, die von den ersten (19) und zweiten (21) Fühlern gemessen werden, zu steuern, wobei die Steuerung des Elektrolyseurs (9) derart erfolgt, dass zumindest teilweise schnelle Variationen der gemessenen Stromflüsse absorbiert werden, wobei die schnellen Variationen der gemessenen Stromflüsse den Variationen entsprechen, deren Absolutwert der Ableitung größer als eine vorbestimmte Schwelle ist.

2. Vorrichtung zur Energiespeicherung (1) nach Anspruch 1, bei der die Kontrolleinheit (23) dazu vorgesehen ist, den Ladezustand der elektrochemischen Batterie (3) auf ein vorbestimmtes Niveau, das zeitlich variabel ist, zu regulieren.

3. Vorrichtung zur Energiespeicherung (1) nach Anspruch 2, bei der das vorbestimmte Niveau in Abhängigkeit von den Vorhersagen zur Produktion durch die Erzeugungseinheit (17) und zum Stromflussverbrauch durch die Last (5) bestimmt wird.

4. Vorrichtung zur Energiespeicherung (1) nach einem der vorhergehenden Ansprüche, bei der der alkalische Elektrolyseur (9) der Wasserstoffspeichereinheit ein einpoliger alkalischer Elektrolyseur ist.

5. Vorrichtung zur Energiespeicherung (1) nach einem der vorhergehenden Ansprüche, bei der die Speichereinheit durch Wasserstoff (7) einen einpoligen alkalischen Elektrolyseur (9) umfasst, der dazu vorgesehen ist, den erhaltenen Stromfluss in Wasserstoff umzuwandeln, wobei Wasserstoffspeichermittel (13) mindestens ein metallisches Hydrid und eine Brennstoffzelle (15) umfassen, die dazu vorgesehen ist, den gespeicherten Wasserstoff in einen Stromfluss umzuwandeln.

6. Vorrichtung zur Energiespeicherung (1) nach Anspruch 5, bei der die Kontrolleinheit dazu vorgesehen ist, die Brennstoffzelle (15) in Abhängigkeit von den Variationen des Stromflusses, die von dem ersten (19) und zweiten (21) Fühler gemessen werden, zu steuern.

7. Vorrichtung zur Energiespeicherung (1) nach einem der vorhergehenden Ansprüche, bei der die mindestens eine Einheit (17) zur Erzeugung eines Stromflusses von einer erneuerbaren Energiequelle mindestens eine Ausrüstung unter den folgenden Ausrüstungen umfasst:
- einen Photovoltaik-Generator,
- ein Windrad,
- einen Wasserkraftgenerator.

8. Verfahren zur Steuerung einer Vorrichtung zur Energiespeicherung (1), die dazu bestimmt ist, von mindestens einer Einheit (17) zur Erzeugung eines Stromflusses von einer erneuerbaren Energiequelle gespeist zu werden, wobei die Vorrichtung die folgenden Ausrüstungen umfasst:
- eine elektrochemische Batterie (3),
- eine Speichereinheit durch Wasserstoff (7), die parallel zu der elektrochemischen Batterie (3) montiert ist, wobei die Speichereinheit (7) einen alkalischen Elektrolyseur (9) und Wasserstoffspeichermittel (13) umfasst,
wobei die Batterie (3) und die Speichereinheit (7) dazu bestimmt sind, einerseits die von der mindestens einen Erzeugungseinheit (17) gelieferte Energie zu speichern, und andererseits eine Last (5) zu speisen,
- einen ersten Messfühler (19) des Stromflusses, der von der mindestens einen Erzeugungseinheit (17) geliefert wird,
- einen zweiten Messfühler (21) des Stromflusses, der von der Last (5) geliefert wird,
- eine Kontrolleinheit (23), die mit den Mitteln zum Messen des Stromflusses verbunden und dazu vorgesehen ist, den Elektrolyseur (9) zu steuern,
wobei das Verfahren die folgenden Schritte umfasst, deren Reihenfolge variieren kann und/oder die gleichzeitig ablaufen können:
- einen Schritt des Messens (101) des Stromflusses, der von der Erzeugungseinheit geliefert wird, durch den ersten Fühler (19),
- einen Schritt des Messens (102) des Stromflusses, der von der Last verbraucht wird, durch den zweiten Fühler (21),
- einen Schritt des Steuerns (103) des Elektrolyseurs (9) in Abhängigkeit von den Messungen des ersten (19) und des zweiten (21) Fühlers, bei dem die Steuerung des Elektrolyseurs (9) derart erfolgt, dass zumindest teilweise die schnellen gemessenen Stromflussvariationen absorbiert werden, wobei die schnellen Variationen der gemessenen Stromflüsse den Variationen entsprechen, deren Absolutwert der Ableitung größer als eine vorbestimmte Schwelle ist.

9. Steuerungsverfahren nach Anspruch 8, umfassend einen zusätzlichen Schritt (104) der Regulierung des Ladezustandes der Batterie (3) auf ein vorbestimmtes und zeitlich variables Niveau.

## Claims

1. Energy storage device (1) intended to be supplied by at least one generation unit (17) for generating an electrical flux from a renewable energy source, said device (1) comprising the following equipment items:
- an electrochemical battery (3),
- a hydrogen storage unit (7) mounted in parallel to the electrochemical battery (3), said storage unit (7) comprising an alkaline electrolyser (9) and hydrogen storage means (13),
said battery (3) and said storage unit (7) being intended on the one hand to store the energy supplied by the at least one generation unit (17) and on the other hand to power a load (5), **characterized in that** the device also comprises
- a first sensor (19) for measuring the electrical flux supplied by the at least one generation unit (17),
- a second sensor (21) for measuring the electrical flux supplied to the load (5),
- a control unit (23) linked to the first (19) and to the second (21) measurement sensors and configured to drive the electrolyser (9) as a function of the variations of electrical flux measured by said first (19) and second (21) sensors, the driving of said electrolyser (9) being performed to at least partially absorb rapid variations of the measured electrical fluxes, the rapid variations of the measured electrical fluxes corresponding to the variations for which the absolute value of the derivative is above a predetermined threshold.

2. Energy storage device (1) according to Claim 1, in which the control unit (23) is configured to regulate the level of charge of the electrochemical battery (3) to a level that is predetermined and variable over time.

3. Energy storage device (1) according to Claim 2, in which the predetermined level is determined as a function of the forecasts of production by the generation unit (17) and of consumption of electrical flux by the load (5).

4. Energy storage device (1) according to one of the preceding claims, in which the alkaline electrolyser (9) of the hydrogen storage unit is a single-pole alkaline electrolyser.

5. Energy storage device (1) according to one of the preceding claims, in which the hydrogen storage unit (7) comprises a single-pole alkaline electrolyser (9) configured to convert the electrical flux received into hydrogen, hydrogen storage means (13) comprising at least one metal hydride and a fuel cell (15) configured to convert the stored hydrogen into electrical flux.

6. Energy storage device (1) according to Claim 5, in which the control unit is configured to drive the fuel cell (15) as a function of the variations of electrical flux measured by said first (19) and second (21) sensors.

7. Energy storage device (1) according to one of the preceding claims, in which the at least one generation unit (17) for generating an electrical flux from a renewable energy source comprises at least one equipment item out of the following equipment items:
- a photovoltaic generator,
- a wind turbine,
- a hydroelectric generator.

8. Method for managing an energy storage device (1) intended to be supplied by at least one generation unit (17) for generating an electrical flux from a renewable energy source, said device comprising the following equipment items:
- an electrochemical battery (3),
- a hydrogen storage unit (7) mounted in parallel to the electrochemical battery (3), said storage unit (7) comprising an alkaline electrolyser (9) and hydrogen storage means (13),
said battery (3) and said storage unit (7) being intended on the one hand to store the energy supplied by the at least one generation unit (17) and on the other hand to power a load (5),
- a first sensor (19) for measuring the electrical flux supplied by the at least one generation unit (17),
- a second sensor (21) for measuring the electrical flux supplied to the load (5),
- a control unit (23) linked to the means for measuring the electrical flux and configured to drive the electrolyser (9),
the method comprising the following steps, the order of which can vary and/or which can run simultaneously:
- a step (101) of measurement of the electrical flux supplied by the generation unit by the first sensor (19),
- a step (102) of measurement of the electrical flux consumed by the load by the second sensor (21),
- a step of driving (103) of the electrolyser (9) as a function of the measurements of the first (19) and of the second (21) sensors in which the driving of the electrolyser (9) is performed so as to at least partially absorb the rapid variations of electrical flux measured, the rapid variations of the electrical fluxes measured corresponding to the variations for which the absolute value of the derivative is above a predetermined threshold.

9. Management method according to Claim 8, comprising an additional step (104) of regulation of the level of charge of the battery (3) to a level that is predetermined and variable over time.
